# EUROPEAN PATENT APPLICATION

(11) **EP 2 639 719 A1**
(43) Date of publication of application: **18.09.2013**
(21) Application number: 13154190.6
(22) Date of filing: 06.02.2013
(51) Int. Cl.: G06F 17/50

(54) **Cabin airflow modeling**

(30) Priority: 15.03.2012 US 201213421056
(71) Applicant: The Boeing Company, Chicago, IL 60606-2016 (US)
(72) Inventor: Lin, Chao-Hsin, Redmond, WA Washington WA98052 (US)
(74) Representative: Hylarides, Paul Jacques

(57) **Abstract**

Systems and methods (100, 200, 300) for cabin airflow modeling are disclosed. In one embodiment, a computer based system (100) to model airflow dynamics in a controlled cabin environment (122), comprises a data store (110) in a tangible computer readable memory (230) which stores a template (110) of the controlled cabin environment (122) and a plurality of logical objects (112) which represent physical objects (402, 404, 406, 408, 410), wherein the logical objects (112) comprise airflow characteristics associated therewith and a processor (222) to construct a two-dimensional layout of the cabin environment (315), and generate, from the two-dimensional layout of the cabin environment (315), a script (140) to construct a three-dimensional airflow model for the cabin environment (320). In some embodiments, the system (100, 200, 300) may be implemented in a computing system (100, 200, 300) or as logic instructions recorded on a computer readable medium.

## Description

### BACKGROUND

The subject matter described herein relates to airflow modeling in confined spaces and more particularly to computer-based systems and methods for airflow modeling of cabins. Vehicles such as commercial air, marine and land vehicles may include one or more cabins to house crew, passengers and/or cargo. Owners and operators of such vehicles may specify varying cabin configurations to accommodate different types of travel and different classes of passengers, branding, and the like.

For example, commercial aircraft may include a cockpit, passenger cabin, and a storage compartment. The passenger cabin may be divided into a first-class section, business class section, and an economy section. As part of the design process, aircraft designers and engineers may need to model airflow parameters through the cabin for health and safety reasons. Accordingly, systems and methods for cabin airflow modeling may find utility.

### Summary

Embodiments of systems and methods in accordance with the present disclosure may provide improved cabin airflow modeling. In one embodiment, a computer based method to model airflow dynamics in a controlled cabin environment comprises creating a data store comprising a template of the controlled cabin environment and a plurality of logical objects which represent physical objects, wherein the logical objects comprise airflow characteristics associated therewith, constructing a two-dimensional layout of the cabin environment, and generating, from the two-dimensional layout of the cabin environment, a script to construct a three-dimensional airflow model for the cabin environment.

In one embodiment, a computer based system to model airflow dynamics in a controlled cabin environment, comprises a data store in a tangible computer readable memory which stores a template of the controlled cabin environment and a plurality of logical objects which represent physical objects, wherein the logical objects comprise airflow characteristics associated therewith and a processor to construct a two-dimensional layout of the cabin environment, and generate, from the two-dimensional layout of the cabin environment, a script to construct a three-dimensional airflow model for the cabin environment.

Further areas of applicability will become apparent from the description provided herein. It should be understood that the description and specific examples are intended for purposes of illustration only and are not intended to limit the scope of the present disclosure.

### Brief Description of the Drawings

Embodiments of methods and systems in accordance with the teachings of the present disclosure are described in detail below with reference to the following drawings.

Fig. 1 is a schematic illustration of a system for cabin airflow modeling according to embodiments.

Fig. 2 is a schematic illustration of a computing device which may be adapted to implement systems and methods for cabin airflow modeling in accordance with some embodiments.

Fig. 3 is a flowchart illustrating operations for creating a mission in a system for cabin airflow modeling according to embodiments.

Fig. 4 is a schematic illustration of an aircraft cabin layout, according to embodiments.

### Detailed Description

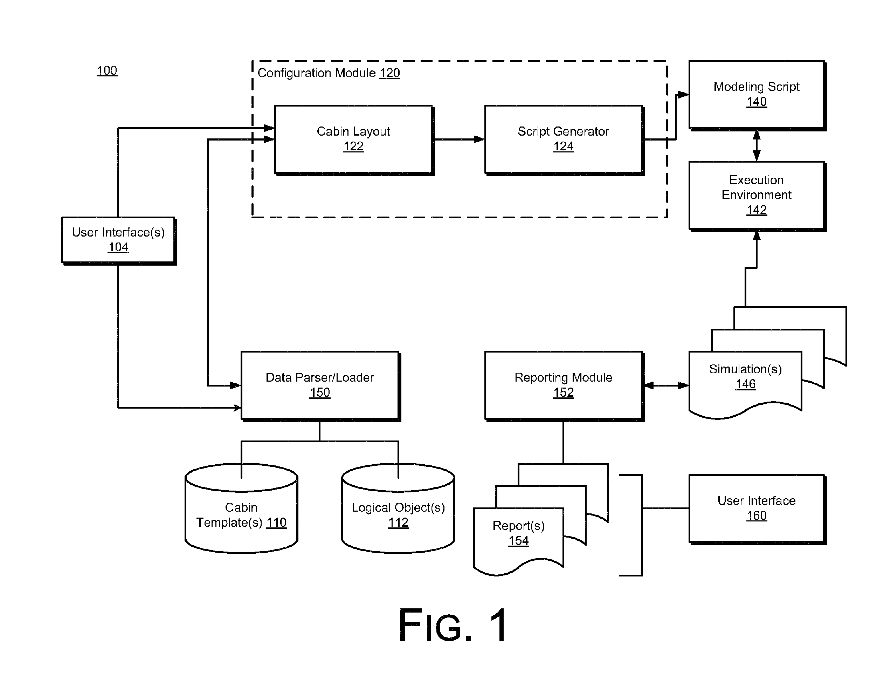

Systems and methods for cabin airflow modeling are described herein. Specific details of certain embodiments are set forth in the following description and in Figs. 1-5 to provide a thorough understanding of such embodiments. One skilled in the art will understand, however, that alternate embodiments may be practiced without several of the details described in the following description.

Fig. 1 is a schematic illustration of a system 100 for cabin airflow modeling according to embodiments. Referring to Fig. 1, in one embodiment the system 100 comprises multiple data stores, or databases, including a cabin template data store 110, and a logical object data store 112. In some embodiments, the system 100 further comprises a configuration module 120, which in turn comprises a cabin layout module 122, and a script generator 124. The system 100 further comprises a modeling script 140, an execution environment 142, and one or more simulations 146. The system 100 further comprises a data parser/loader 150, a reporting module 152 capable of generating one or more reports 154 and may comprise a user interfaces 104, 160 to interact with components cabin template data store 110 may comprise data identifying cabin layouts for one or more particular vehicles.

In the context of an aircraft, cabin template data store 110 may comprise one or more templates for layouts for a specific aircraft associated with aircraft data such as, e.g., an aircraft identifier, data pertaining to the aircraft operator, flight operations, and data related to one or more of the aircraft systems. The cabin layout module 122, the script generator module 124, the data parser/loader 150, and the reporting module 152 may be implemented as logic instructions stored on a computer readable medium and executable by a processor, e.g., software.

In some embodiments the various data stores 110, 112 may be implemented as databases or as flat files stored on a computer readable medium. The cabin template 110 may be used to store various aircraft cabin layouts, while the logical object database 112 may be used to store logical objects which represent physical objects that reside in an aircraft cabin. By way of example, logical objects may include fixtures such as seats, partitions, walls, stationary and mobile galley equipment, luggage equipment, occupants (i.e. passengers and crew), and the like. Logical objects may further include systems such as ventilation and airflow systems. Logical objects may further include human or animal objects. The data in databases 110 and 112 may be stored in a suitable computer readable storage medium, e.g., a magnetic storage medium, an optical storage medium, or combinations thereof.

The modeling script 140 and the execution environment 142 may be embodied as modular components which are functionally separate from the configuration module 120. In some embodiments the modeling script 140 may be implemented as logic instructions encoded in a computer readable medium and executable on a processor. By way of example, in one embodiment the execution environment 142 may comprise hardware and software on which the modeling script may be executed.

In some embodiments the simulation(s) 146 may be used to simulate air flow modeling under varying cabin configurations and conditions in accordance with one or more predetermined models. The simulation(s) 146 may utilize parameters provided by a user of the system or derived from operational data for an aircraft fleet as inputs. The simulation(s) 146 may interface with a reporting module 152, which may create one or more reports 154 accessible via a user interface 160.

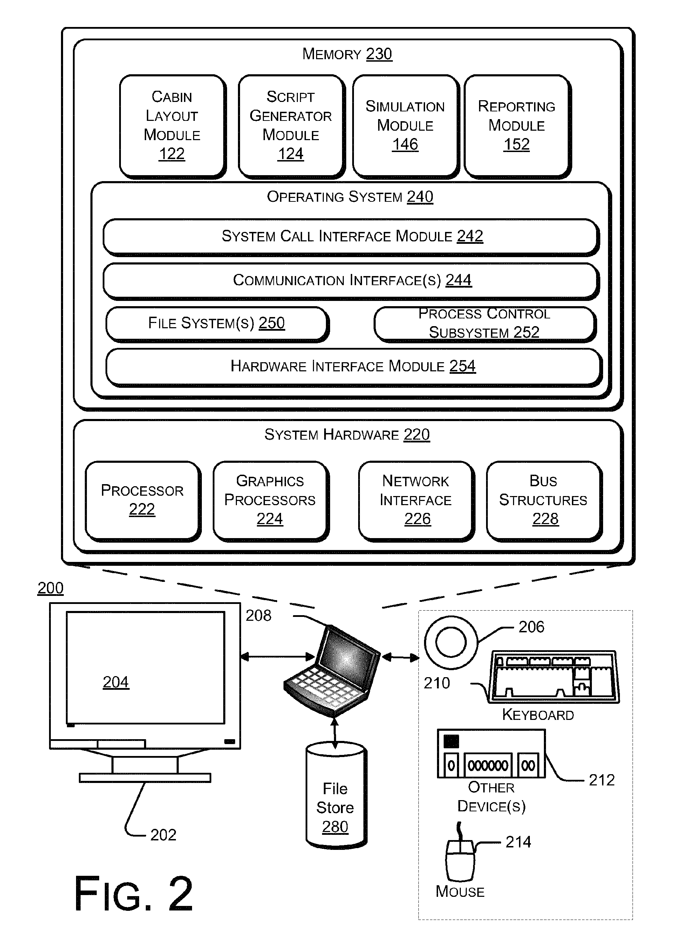

In some embodiments the system depicted in Fig. 1 may be implemented in a computer system environment. Figure 2 is a schematic illustration of a computing system environment 200 which may be adapted to implement systems and methods for cabin airflow modeling in accordance with some embodiments. In one embodiment, system 200 includes a computing device 208 and one or more accompanying input/output devices including a display 202 having a screen 204, one or more speakers 206, a keyboard 210, one or more other I/O device(s) 212, and a mouse 214. The other I/O device(s) 212 may include a touch screen, a voice-activated input device, a track ball, and any other device that allows the system 400 to receive input from a user.

The computing device 208 includes system hardware 220 and memory 230, which may be implemented as random access memory and/or read-only memory. A file store 280 may be communicatively coupled to computing device 208. File store 280 may be internal to computing device 208 such as, e.g., one or more hard drives, CD-ROM drives, DVD-ROM drives, or other types of storage devices. File store 280 may also be external to computer 208 such as, e.g., one or more external hard drives, network attached storage, or a separate storage network.

System hardware 220 may include one or more processors 222, a two graphics processor(s) 224, network interfaces 226, and bus structures 228. As used herein, the term "processor" means any type of computational element, such as but not limited to, a microprocessor, a microcontroller, a complex instruction set computing (CISC) microprocessor, a reduced instruction set (RISC) microprocessor, a very long instruction word (VLIW) microprocessor, or any other type of processor or processing circuit.

Graphics processor(s) 224 may function as adjunct processors that manage graphics and/or video operations. Graphics processor(s) 224 may be integrated onto the motherboard of computing system 400 or may be coupled via an expansion slot on the motherboard.

In one embodiment, network interface 226 could be a wired interface such as an Ethernet interface (see, e.g., Institute of Electrical and Electronics Engineers/IEEE 802.3-2002) or a wireless interface such as an IEEE 802.11a, b or g-compliant interface (see, e.g., IEEE Standard for IT-Telecommunications and information exchange between systems LAN/MAN--Part II: Wireless LAN Medium Access Control (MAC) and Physical Layer (PHY) specifications Amendment 4: Further Higher Data Rate Extension in the 2.4 GHz Band, 802.11G-2003). Another example of a wireless interface would be a general packet radio service (GPRS) interface (see, e.g., Guidelines on GPRS Handset Requirements, Global System for Mobile Communications/GSM Association, Ver. 3.0.1, December 2002).

Bus structures 228 connect various components of system hardware 228. In one embodiment, bus structures 228 may be one or more of several types of bus structure(s) including a memory bus, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

Memory 230 may include an operating system 240 for managing operations of computing device 208. In one embodiment, operating system 240 includes a hardware interface module 254 that provides an interface to system hardware 220. In addition, operating system 240 may include a file system 250 that manages files used in the operation of computing device 208 and a process control subsystem 252 that manages processes executing on computing device 208.

Operating system 240 may include (or manage) one or more communication interfaces that may operate in conjunction with system hardware 220 to transceive data packets and/or data streams from a remote source. Operating system 240 may further include a system call interface module 242 that provides an interface between the operating system 240 and one or more application modules resident in memory 230. Operating system 240 may be embodied as a Windows® brand operating system or as a UNIX operating system or any derivative thereof (e.g., Linux, Solaris, etc.), or other operating systems.

In various embodiments, the computing device 208 may be embodied as a computer system such as a personal computer, a laptop computer, a server, or another computing device.

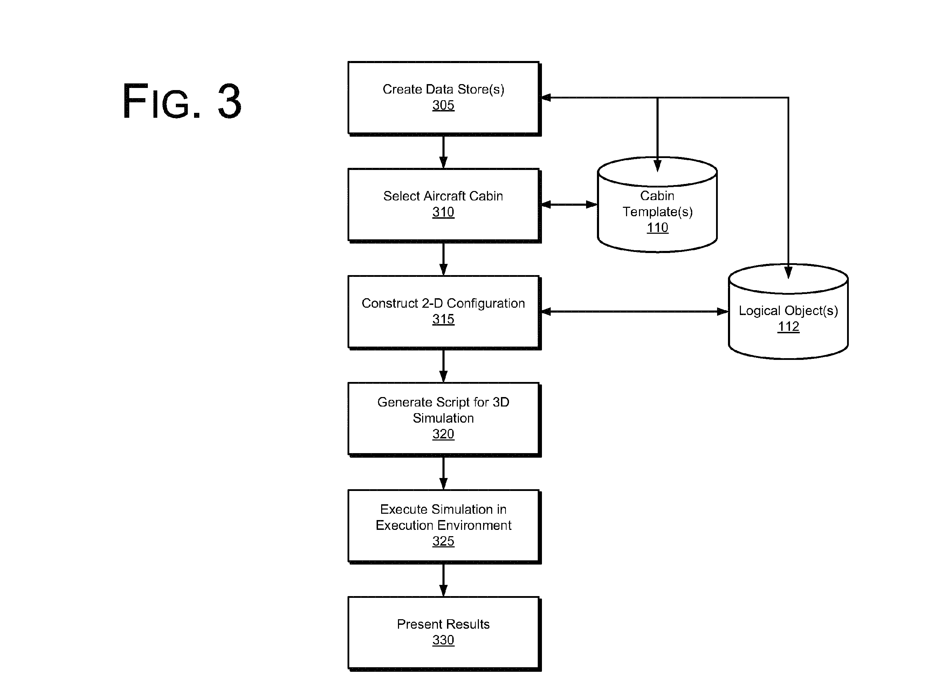

In one embodiment, memory 230 includes a cabin layout module 122, a script generator module 124, one or more simulation modules 146, and a reporting module 152 to implement the operations described with reference to Fig. 3. Having described the various components of a system 100 for vehicle condition monitoring and reporting, various operations of the system will now be described. Fig. 3 is a flowchart illustrating operations in a method for cabin airflow modeling according to embodiments. Referring now to Fig. 3, at operation 305 a data store is created which comprises one or more templates of a controlled cabin environment. By way of example, in some embodiments the data store of cabin templates 110 may be populated with templates of cabin layouts for cabins of various aircraft. In some embodiments the cabin templates may define an empty cabin space. In other embodiments the templates may include preset cabin configuration features such as, e.g., specific seating layouts, lavatory locations, exit doors, cockpit configurations, galley layouts and configurations, and the like. The cabin layout templates may be stored in any type of data file structure in the cabin layout data store 110.

At operation 310 an aircraft cabin may be selected. By way of example, in some embodiments one or more aircraft types may be presented on a user interface 104 and one or more users of the system 100 may select an aircraft cabin from the choices presented on the user interface 104. The aircraft cabin template for the selected aircraft cabin may be retrieved from the data store and presented on the user interface for manipulation and configuration.

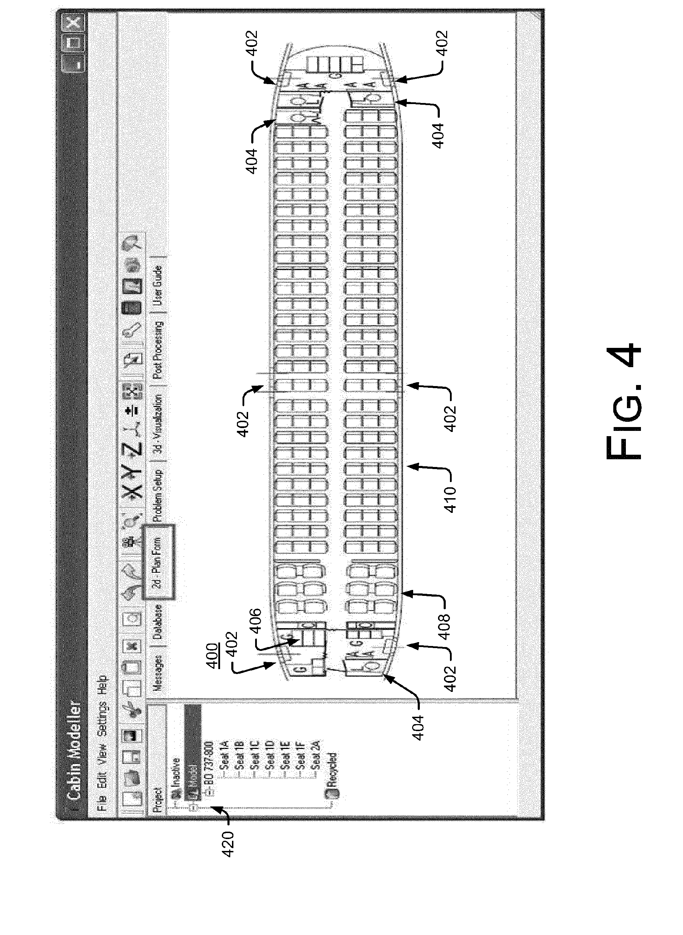

At operation 315 a two-dimensional internal configuration for the selected aircraft is constructed. By way of example, in some embodiments one or more logical objects may be retrieved from the logical object data store 112 and positioned in the cabin template selected in operation 310. As described above, in some embodiments the cabin configuration may define the dimensions of various cabin measurements and fixture such as exit doors 402. Logical objects may represent the lavatories 404, galley fixtures 406, first class seats 408 and economy seats 410. Additional logical objects may be added to represent overhead luggage compartments and airflow systems not visible in the floor plan view depicted in Fig. 4.

The various logical objects have physical properties associated with them. By way of example, the objects may have physical dimensions and shapes associated with them. In addition, a user may specify one or more physical and material properties such as, e.g., airflow rates, angles, temperatures, heat flux parameters, viscosity and thermal conductivity of fluids, etc., associated with the objects.

In some embodiments the various logical objects may be added to the template using a drag and drop technique. By way of example, logical objects stored in the logical object data store 112 may be represented by icons which may be selected, dragged and dropped onto the template in desired positions and quantities. As the graphical user interface is populated the system generates a file structure 420 corresponding to the layout.

A user of the system may populate one or more of the seats with a human object. A human object may have physical characteristics associated with it, e.g., height weight, shape, etc., and may have airflow characteristics associated with them. In addition, human objects may be assigned a mobile capability in which an object can move about aisles in the cabin.

In some embodiments the user interface allows a user to generate a three-dimensional view of the cabin. The three dimensional view may be viewed from various perspectives to evaluate the cabin layout.

Referring back to Fig. 3, once the cabin layout has been finalized control passes to operation 320 and the two-dimensional cabin layout may be used to generate a script for one or more three-dimensional cabin simulations. The script may include cabin geometry parameters and adequate boundary conditions for a computational fluid dynamics (CFD) pre-processor to generate a three-dimensional CFD model. At operation 325 the simulation may be executed using the CFD model. By way of example, in some embodiments the system may implement one or more of a single-phase airflow and thermal simulation, a multiphase pathogen dispersion simulation, or a multi-species gas/vapor phase dispersion simulation. The simulation(s) may accommodate changing environmental conditions such as, e.g., changes in air temperature and pressure inside the cabin, breathing patterns of the occupants, movement of the occupants within the cabin, airflows throughout the cabin, and the like.

At operation 330 results of the simulation may be presented to a user of the system. By way of example, referring back to Fig. 1, the simulations 146 may present one or more reports 154 via a reporting module 152. The reports 154 may be made accessible to a user via a user interface 160.

In the figures and the text, a computer based system is disclosed to generate a model for airflow dynamics in a controlled cabin environment, including: a data store 110 in a tangible computer readable memory 230 which stores a template 110 of the controlled cabin environment and a plurality of logical objects 112 which represent physical objects 402, 404, 406, 408, 410, wherein the logical objects 112 comprise airflow characteristics associated therewith; and a processor 222 to:
construct a two-dimensional layout of the cabin environment 315 from the template 110 and the plurality of logical objects 112;
generate, from the two-dimensional layout of the cabin environment 315, a script 140 to construct a three-dimensional airflow model for the cabin environment 320. In one variant, the computer based system includes wherein the data store 110 includes fixed objects 402, 404, 406, 408, 410 and mobile objects 112 which move along one or more predetermined paths in the cabin environment in accordance with a predetermined model 140. In another variant, the computer based system includes wherein the data store 110 includes one or more human objects 112 which generate an airflow pattern in accordance with a predetermined model 140. In yet another variant, the computer based system includes wherein the data store 110 includes a template 110 of the controlled cabin environment comprises specifying at least one of a fluid flow rate and flow orientation in the cabin, a wall temperature, a heat flux parameter, and one or more dispersion sources.

In one instance, the computer based system includes wherein the processor 222 executes the script 140 to implement a simulation 146 of airflow dynamics in the controlled cabin environment. In another instance, the computer based system includes wherein the simulation 146 models airflow dynamics in the cabin using the airflow characteristics associated with the objects 112 and according to a predetermined model 140. In still another instance, the computer based system includes wherein the processor 222 generates a graphical user interface 104, 160 to allow a user to drag and drop one or more iconic representations of objects 112 into a cabin layout template 110. In one example, the computer based system includes wherein the iconic representations define an interior cabin configuration.

In one aspect, a computer based method is disclosed to model airflow dynamics in a controlled cabin environment, including creating a data store 110 including a template 110 of the controlled cabin environment and a plurality of logical objects 112 which represent physical objects 402, 404, 406, 408, 410, wherein the logical objects 112 comprise airflow characteristics associated therewith; constructing a two-dimensional layout of the cabin environment 315 from the template 110 and the plurality of logical objects 112;
and generating, from the two-dimensional layout of the cabin environment 315, a script to construct a three-dimensional airflow model for the cabin environment 320. In one variant, the computer based method includes wherein the data store 110 includes fixed objects 112, 402, 404, 406, 408, 410 and mobile objects 112 which move along one or more predetermined paths in the cabin environment in accordance with a predetermined model 140.
In another variant, the computer based method includes wherein the data store 112 comprises one or more human objects 112 which generate an airflow pattern in accordance with a predetermined model 140. In yet another variant, the computer based method includes wherein creating a data store 110 including a template 110 of the controlled cabin environment comprises specifying at least one of a fluid flow rate and flow orientation in the cabin, a wall temperature, a heat flux parameter, and one or more dispersion sources.

In one instance, the computer based method includes further including executing the script 140 to implement a simulation 146 of airflow dynamics in the controlled cabin environment. In another instance, the computer based method includes wherein the simulation 146 models airflow dynamics in the cabin using the airflow characteristics associated with the objects 112 and according to a predetermined model 140. In yet another instance, the computer based method includes wherein constructing a two-dimensional layout of the cabin environment 315 includes utilizing a graphical user interface 104, 160 to drag and drop one or more iconic representations of objects 112 into a cabin layout template 110.

Thus, described herein is a computer based system and method for cabin airflow modeling. In brief, the system enables a user to select a two-dimensional cabin template and design a cabin layout by populating the template with objects. The two-dimensional module may then be used to construct a three-dimensional CFD model, which may be input to a simulation processor.

In the foregoing discussion, specific implementations of exemplary processes have been described, however, it should be understood that in alternate implementation, certain acts need not be performed in the order described above. In alternate embodiments, some acts may be modified, performed in a different order, or may be omitted entirely, depending on the circumstances. Moreover, in various alternate implementations, the acts described may be implemented by a computer, controller, processor, programmable device, firmware, or any other suitable device, and may be based on instructions stored on one or more computer-readable media or otherwise stored or programmed into such devices (e.g. including transmitting computer-readable instructions in real time to such devices). In the context of software, the acts described above may represent computer instructions that, when executed by one or more processors, perform the recited operations. In the event that computer-readable media are used, the computer-readable media can be any available media that can be accessed by a device to implement the instructions stored thereon.

While various embodiments have been described, those skilled in the art will recognize modifications or variations which might be made without departing from the present disclosure. The examples illustrate the various embodiments and are not intended to limit the present disclosure. Therefore, the description and claims should be interpreted liberally with only such limitation as is necessary in view of the pertinent prior art.

## Claims

1. A computer based system to generate a model for airflow dynamics in a controlled cabin environment, comprising:
a data store (110) in a tangible computer readable memory (230) which stores a template (110) of the controlled cabin environment (122) and a plurality of logical objects (112) which represent physical objects (402, 404, 406, 408, 410), wherein the logical objects (112) comprise airflow characteristics associated therewith; and
a processor (222) to:
construct a two-dimensional layout of the cabin environment (315) from the template (110) and the plurality of logical objects (112);
generate, from the two-dimensional layout of the cabin environment (315), a script (140) to construct a three-dimensional airflow model for the cabin environment (320).

2. The computer based system of claim 1, wherein the data store (110) comprises fixed objects (402, 404, 406, 408, 410) and mobile objects (112) which move along one or more predetermined paths in the cabin environment (122) in accordance with a predetermined model (140), and one or more human objects (112) which generate an airflow pattern in accordance with the predetermined model (140).

3. The computer based system of claims 1 or 2,
wherein the data store (110) comprises a template (110 ) of the controlled cabin environment (122) comprises specifying at least one of a fluid flow rate and flow orientation in a cabin, a wall temperature, a heat flux parameter, and one or more dispersion sources.

4. The computer based system of any of claims 1-4,
wherein the processor (222) executes the script to implement a simulation (146) of airflow dynamics in the controlled cabin environment (122) and the processor (222) generates a graphical user interface (104, 160) to allow a user to drag and drop one or more iconic representations of objects (112) into a cabin layout template (110); and wherein the processor (222) generates a graphical user interface (104, 160) to allow a user to drag and drop one or more iconic representations of objects (112) into a cabin layout template (110).

5. The computer based system of claim 4, wherein the simulation (146) models airflow dynamics in the cabin using the airflow characteristics associated with the objects (112) and according to a predetermined model (146), and wherein the processor (222) generates a graphical user interface (104, 160) to allow a user to drag and drop one or more iconic representations of objects (112) into a cabin layout template (110) and the iconic representations define an interior cabin configuration (122).

6. A computer based method to model airflow dynamics in a controlled cabin environment (122), comprising:
creating a data store (110) comprising a template (110) of the controlled cabin environment and a plurality of logical objects (112) which represent physical objects (112, 402, 404, 406, 408, 410), wherein the logical objects (112) comprise airflow characteristics associated therewith;
constructing a two-dimensional layout of the cabin environment (315) from the template and the plurality of logical objects (112);
generating, from the two-dimensional layout of the cabin environment (315), a script to construct a three-dimensional airflow model for the cabin environment (320).

7. The computer based method of claim 6, wherein the data store (110) comprises fixed objects (112, 402, 404, 406, 408, 410) and mobile objects (112) which move along one or more predetermined paths in the cabin environment (122) in accordance with a predetermined model (140); and wherein the data store (112) comprises one or more human objects (112) which generate an airflow pattern in accordance with a predetermined model (140).

8. The computer based method of any of claims 6 or 7, wherein creating a data store (110) comprising a template (110) of the controlled cabin environment (122) comprises specifying at least one of a fluid flow rate and flow orientation in a cabin, a wall temperature, a heat flux parameter, and one or more dispersion sources.

9. The computer based method of any of claims 6-8, further comprising executing the script (140) to implement a simulation (146) of airflow dynamics in the controlled cabin environment (122); and wherein the simulation (146) models airflow dynamics in the cabin using the airflow characteristics associated with the objects (112) and according to a predetermined model (140);

10. The computer based method of any of claims 6-9, wherein constructing a two-dimensional layout of the cabin environment (315) comprises utilizing a graphical user interface (104, 160) to drag and drop one or more iconic representations of objects (112) into a cabin layout template (110), the iconic representations define an interior cabin configuration (122).
